# EUROPÄISCHE PATENTANMELDUNG

(11) **EP 3 805 410 A1**
(43) Veröffentlichungstag der Anmeldung: **14.04.2021**
(21) Anmeldenummer: 20200508.8
(22) Anmeldetag: 07.10.2020
(51) Int. Cl.: C21C 5/36

(54) **VERFAHREN ZUR ENTPHOSPHORUNG EINER STAHLSCHMELZE WÄHREND DES FRISCHPROZESSES**

(30) Priorität: 11.10.2019 DE 102019215678
(71) Anmelder: SMS Group GmbH, 40237 Düsseldorf (DE)
(72) Erfinder: Khadhraoui, Sabrine, 40699 Erkrath (DE); de Fries, Uwe, 47506 Neukirchen-Vluyn (DE); Hofmann, Axel, B-4830 Limbourg (BE)
(74) Vertreter: Klüppel, Walter

(57) **Zusammenfassung**

Die Erfindung betrifft ein Verfahren zum Entkohlen und Entphosphern einer Stahlschmelze in einem metallurgischen Reaktor mittels einer regelbaren oder steuerbaren Zugabe eines Prozessgases unter Zugabe eines Schlackebildners, dadurch gekennzeichnet, dass
die Konzentration von Dicalciumsilicat (C2S) in der Schlacke im Bereich der Sättigung durch Zugabe von Schlackebildnern eingestellt wird;
der FeO-Gehalt in der Schlacke < 15 Gew.-% beträgt;
die Zugabe von Sauerstoff durch das Prozessgas bei Erreichen des Bereiches der C2S-Sättigung in der Schlacke reduziert wird;
das in der Schmelze gelöste Phosphor (P) durch die Bildung einer C2S - 3CaO·P2O5-Phase in der Schlacke gebunden wird;
eine Rückphospherung der Stahlschmelze durch die Schlacke mittels einer Prozess- und / oder Schlackenführung vermieden wird, wobei
• hierbei Schlackebildner während des Verfahrens zur Schlackenführung zugegeben werden können,
• die weitere Entkohlung der Schmelze ohne Zugabe von Sauerstoff erfolgt, oder
• die weitere Entkohlung der Schmelze durch eine regelbare oder steuerbare Sauerstoffzugabe erfolgt.

## Beschreibung

### 1. Gebiet der Erfindung

Die Erfindung betrifft ein Verfahren zum Entkohlen und Entphosphern einer Stahlschmelze in einem metallurgischen Reaktor, beispielsweise einem Konverter wie einem BOF-Konverter, mittels einer regelbaren und/oder steuerbaren Zugabe von Prozessgas unter einer Zugabe von Schlackebildnern.

### 2. Stand der Technik

Die Entkohlung einer Stahlschmelze in einem metallurgischen Reaktor, insbesondere in einem Konverter (BOF), ist verknüpft mit einer Entfernung von Phosphor (P) mittels einer Zugabe von Sauerstoff über ein Prozessgas. Der Kohlenstoff reagiert mit Sauerstoff zu gasförmigem CO/CO₂, wohingegen das Phosphor als einer oxydischen Verbindung in einer Schlacke gelöst wird. Die Zusammensetzung der Schlacke am Anfang und am Ende der Sauerstoffzugabe durch ein Prozessgas im Konverter spielt dabei bei der Entfernung von Phosphor aus der Stahlschmelze eine besondere Rolle.

Im Frischprozess ist die Regelung der Schlackenzusammensetzung während und zum Ende des Blasvorgangs für die Entfernung von Phosphor aus dem heißen Metall bis zu einem vorgegebenen Zielwert äußerst wichtig. Die Ziel-Schlackenzusammensetzung wird üblicherweise um die Kalt-Sättigungsregion herum eingestellt und die Zugabe von Kalk wird dementsprechend geregelt. Während des Prozesses werden hohe Entphospherungsraten hauptsächlich während der letzten Minuten des Blasens von Prozessgas in den Konverter erreicht, wobei dies nach einem kritischen Punkt erfolgt, bei dem die Bildung von FeO mit hoher Rate voranschreitet, wodurch die Kalkauflösung unterstützt wird und somit optimale Bedingungen für die Entfernung von Phosphor aus dem geschmolzenen Eisen zu Verfügung gestellt werden.

Es hat sich jedoch herausgestellt, dass optimale Entphospherungs-Bedingungen nicht im Bereich der Kalk-Sättigung gegeben sind. Zudem führt der Übergang von Eisen aus der Schmelze in die Schlacke in Form von FeO zu einer Verringerung des Ertrags des Frischprozess und fordert überdies die Zusage großer Mengen an Kalk während des Frischprozesses.

### 3. Aufgabe der Erfindung

Es war daher eine Aufgabe der Erfindung, ein Verfahren zum Entkohlen und Entphosphern einer Stahlschmelze in einem metallurgischen Reaktor zur Verfügung zu stellen, welches in der Lage ist, die bisherige Prozessführung zu verbessern, den Austrag an FeO aus der Schmelze zu reduzieren und den Kalkverbrauch bei gleichbleibend niedrigen Phosphor-Gehalten in der schlussendlich erreichten Stahlzusammensetzung zu verringern.

Diese Aufgabe wird im erfindungsgemäßen Sinne mittels eines Verfahrens, umfassend die Merkmale des Anspruchs 1, gelöst. Vorteilhafte Ausgestaltungen der Erfindung sind in den abhängigen Ansprüchen sowie in der nachfolgend detaillierten Beschreibung der Erfindung dargelegt.

### 4. Zusammenfassung der Erfindung

Erfindungsgemäß wird ein Verfahren zum Entkohlen und Entphosphern einer Stahlschmelze in einem metallurgischen Reaktor mittels einer regelbaren oder steuerbaren Zugabe eines Prozessgases unter Zugabe eines Schlackebildners zur Verfügung gestellt, wobei dieses Verfahren erfindungsgemäß dadurch gekennzeichnet ist, dass die Konzentration von Dicalciumsilicat (C2S) in der Schlacke im Bereich der Sättigung durch Zugabe von Schlackebildnern und einer Verschlackung von Silicium (Si) aus der Stahlschmelze eingestellt wird, der FeO-Gehalt in der Schlacke weniger als 20% beträgt, die Zugabe von Sauerstoff durch das Prozessgas bei Erreichen des Bereichs der C2S-Sättigung in der Schlacke reduziert wird, der in der Schmelze gelöste Phosphor (P) durch die Bildung einer C2S-3CaO · P₂O₅-Phase in der Schlacke gebunden wird, eine Rückphospherung der Stahlschmelze durch die Schlacke mittels einer Prozess- und/oder Schlackenführung vermieden wird, wobei hierbei Schlackebildner während des Verfahrens zur Schlackenführung zugegeben werden können, die weitere Entkohlung der Schmelze ohne Zugabe von Sauerstoff erfolgt, oder die weitere Entkohlung der Schmelze durch eine regelbare oder steuerbare Sauerstoffzugabe erfolgt.

Als "im Bereich der Sättigung von Dicalciumsilicat (C2S) im erfindungsgemäßen Sinne wird dabei derjenige Bereich im Ternärsystem, bestehend aus CaO, FeO sowie SiO₂, verstanden, der bei der vorgegebenen Prozesstemperatur aus der Literatur bekannt ist, wobei eine Sättigung im erfindungsgemäßen Sinne auch bei einer Abweichung der Einzelbestandteile der Schlacke von +/- 10% gemessen an den Grenzwerten des Sättigungsbereiches, vorliegt.

Die Erfindung nutzt die Erkenntnis, dass der Kalk-Sättigungsbereich im ternären System CaO-FeO-SiO₂ verglichen mit den C2S-Sättigungsbereichen eine vergleichsweise enge Zone bildet, wobei selbst bei Temperaturen von 1.700°C die Kaltsättigung nur dann erreicht werden kann, wenn der SiO₂-Gehalt der Schlacke unterhalb 10 Gew.-% liegt. Dies bedeutet, dass sehr hohe Basizität-Werte, definiert als der Quotient aus CaO und SiO₂, erforderlich sind und somit hohe Mengen an Kalk zugegeben werden müssen, um den Kalk-Sättigungsbereich zu erreichen. Darüber hinaus sollten hohe FeO-Gehalte in der Schlacke eingestellt werden, um diese hohen Mengen an Kalk lösen zu können. Dies führt jedoch zu einer Absenkung des Eisenertrags des Frischprozesses, zur Bildung großer Mengen an Schlacke sowie einem hohen Verschleiß der Ausmauerung des Konverters.

Die Entfernung von Phosphor aus der Stahlschmelze läuft unterschiedlich schnell ab. Die höchsten Entphospherungs-Raten werden üblicherweise während der letzten Minuten des Blasprozesses erreicht, was bedeutet, dass diese hohen Entphospherungsraten nach Durchlaufen des kritischen Punkts des Blasprozesses, bei dem die FeO-Bildung mit hoher Rate voranschreitet, auftritt, wo durch die Kalk-Auflösung und somit optimale Bedingungen für die Entfernung von Phosphor aus der geschmolzenen Stahlschmelze erreicht werden.

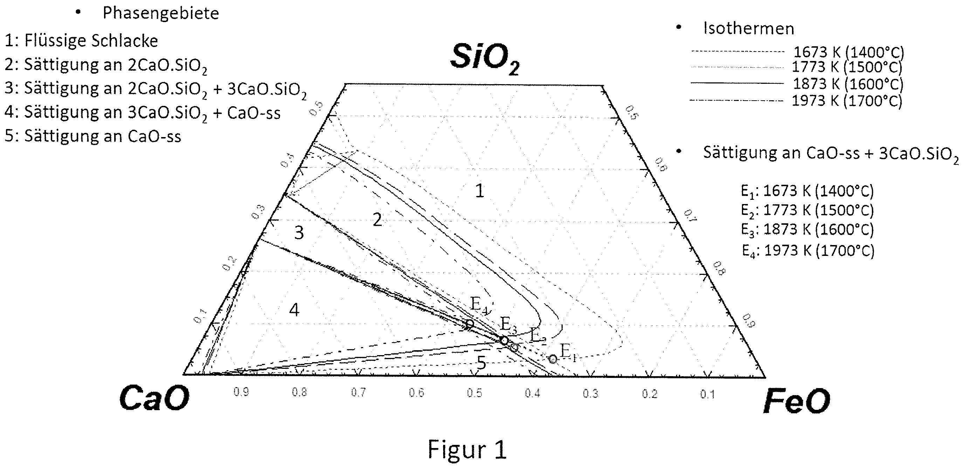

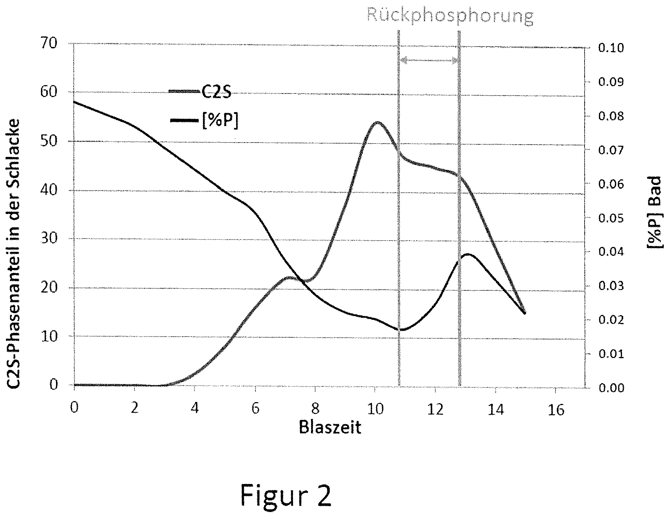

Erfindungsgemäß werden abweichend von den aus dem Stand der Technik bekannten Prozessführungen die Konverterschlacken so eingestellt, dass je eine Sättigung an 2CaO · SiO₂ (als C2S bezeichnet) aufweisen, wodurch Phosphor unter Bildung von 2CaO · SiO₂-3CaO · P₂O₅ in fester Lösung gelöst werden kann. Während des Blasens in einem Standardkonverterprozess steigt die Menge diese Phase schrittweise in der Schlacke an und erreicht üblicherweise ihr Maximum bei etwa 2/3 der Blaszeit (siehe Figur 2). Danach beginnt sich diese Phase wieder aufzulösen, unter Bildung einer erhöhten Menge an flüssiger Schlacke aufgrund des Anstiegs des FeO-Gehaltes in der flüssigen Schlacke (siehe Figur 1).

Dies führt schlussendlich zu einem Anstieg des Phosphor-Gehalts in der Schmelze im letzten Drittel des Blasprozesses aufgrund der oben erwähnten Auflösung der phosphorhaltigen Phase innerhalb der Schlacke und aufgrund des Umstands, dass die Phosphor-Kapazität der flüssigen Schlacke für die Aufnahme des freigewordenen Phosphors zu niedrig ist.

Die Erfindung nutzt weiterhin die Erkenntnis, dass hohe FeO-Gehalte in der Schlacke nicht erforderlich sind, um niedrige Phosphor-Gehalte in der Schmelze einzustellen. Wenn der FeO-Gehalt in der Schlacke niedriger als 15%, vorzugsweise niedriger als 10%, eingestellt wird, können hohe Phosphor-Entfernungsraten aus der Metallschmelze, von vorzugsweise 350 kg/min. in einem Standard-Konverter erreicht werden. Dies führt zu dem Erreichen des gewünschten Phosphor-Gehalts innerhalb der Stahlschmelze vorzugsweise innerhalb von 60%-80% der gesamten Blaszeit, typischerweise 8 bis 12 Minuten nach Beginn des Blasprozesses. Diese Raten für die Phosphor-Entfernung sind ebenso hoch oder höher als diejenigen, die während der ersten 4 Minuten des Blasprozesses erreicht werden konnten, bei denen der FeO-Gehalt in einem Bereich von zwischen 15 bis 45 Gew.-% innerhalb der Schlacke variiert. Es wurde ebenso erkannt, dass die Entkohlungsrate sowohl zu Beginn des Blasprozesses innerhalb der ersten 4 Minuten als auch in dem Bereich zwischen 8 bis 12 Minuten nach Beginn des Blasprozesses vergleichbar sind, was bedeutet, dass davon ausgegangen werden kann, dass die Entkohlungs- und die Entphospherungs-Reaktionen keinen besonderen Einfluss aufeinander ausüben.

Hohe Entphospherungs-Raten werden gleichwohl immer dann erreicht, wenn die Gehalte an FeO in der Schlacke bei niedrigen bis moderaten Größen verblieben, nämlich dann, wenn Phosphor innerhalb der C2S-Phase gelöst vorliegen kann.

Erfindungsgemäß wird somit in Abwandlung von den aus dem Stand der Technik bekannten Prozessen die Zugabe von Sauerstoff im Konverter-Prozess zu einem früheren Zeitpunkt gestoppt, nämlich dann, wenn der Phosphor-Gehalt innerhalb der Metallschmelze erstmals den vorab vorgegebenen Zielwert erreicht und weiterhin niedrige Schlackenmengen und ein niedriger FeO-Gehalt innerhalb der Schlacke von < 20%, vorzugsweise < 10%, vorliegt. Der weitere Konverter-Prozess kann dann unter Vermeidung einer Rückphospherungs-Reaktion der Stahlschmelze unter gezielt niedrigerer Sauerstoffzugabe von vorzugsweise 50%, besonders bevorzugt kleiner 60%, überaus bevorzugt kleiner 75% gemessen an der Anfangszugabe von Sauerstoff oder aber unter Vermeidung jedweder Sauerzufuhr zur Erreichung der gewünschten End-Kohlenstoff-Gehalte innerhalb der Metallschmelze fortgesetzt werden. Die dann verwendeten Prozessgase können ein im Wesentlichen sauerstofffreies Gas oder eine Mischung zwischen einem sauerstofffreien Gas und einem Sauerstoff enthaltenden Gas sein. Auf diese Weise kann die Entkohlung unter Ausnutzung eines niedrigen CO/CO₂-Partialdrucks fortgesetzt werden, während gleichzeitig keine oder nur geringe Änderungen des Phosphor-Gehalts innerhalb der Schmelze auftreten.

In einer bevorzugten Ausführungsform der Erfindung wird der Schlackebildner kontinuierlich oder diskontinuierlich während des Blasprozesses zugegeben, wodurch die Einstellung der gewünschten Schlackenzusammensetzung und insbesondere das Erreichen und Beibehalten der Sättigung der Konzentration von Dicalciumsilicat innerhalb der Schlacke vorteilhaft unterstützt wird.

Insbesondere wird bevorzugt, wenn der Schlackebildner Kalk (CaO), Siliciumdioxid (SiO₂) und/oder weitere Bestandteile aufweist.

Weiterhin wird bevorzugt, wenn das Prozessgas, das vorzugsweise über Blaslanzen in den Konverter zugeführt wird, einen steuer- oder regelbaren variablen Anteil an Sauerstoff enthält. Hierdurch kann die Entphospherungs- und Entkohlungs-Reaktion innerhalb der Stahlschmelze sowie die Bildung von Schlacke mit einer gewünschten Zusammensetzung vorteilhaft unterstützt werden.

Besonders bevorzugt wird in diesem Zusammenhang, wenn die gesamte Prozessführung des Entkohlungs- und Entphospherungs-Verfahrens einem vorab berechneten thermodynamischen Modell folgt. Überaus bevorzugt wird, wenn während des Verfahrens Kontrollmessungen, vorzugsweise Online-Kontrollmessungen, vorgenommen werden, um etwaige Abweichungen vom vorab berechneten Modellprozess feststellen und gegebenenfalls in geeigneter Weise die Prozessführung einregeln zu können.

### 5. Kurze Beschreibung der Figuren

Die Erfindung wird nachfolgend unter Bezugnahme auf 4 Figuren näher erläutert, in denen Erkenntnisse des Fachmanns sowie Einzelheiten der erfindungsgemäßen Verfahrensführung zu entnehmen sind.

In den Figuren zeigen:
- Figur 1: das ternäre System FeO-CaO-SiO₂ mit Liquidus-Isothermen bei 1400°C, 1.500°C, 1.600°C und 1.700°C,
- Figur 2: eine grafische Darstellung der Bildung der C2S-Phase innerhalb der Schlacke und des Phosphor-Gehalts im Metallbad über die Blaszeit betrachtet,
- Figur 3a): die Entwicklung des Fe-Gehalts in der Schlacke über die Blaszeit betrachtet,
- Figur 3b): die Phosphor-Entfernungsraten, betrachtet über die Blaszeit, und
- Figur 4: eine Darstellung analog zu Figur 2 mit Darstellung desjenigen Punkts der erfindungsgemäßen Prozessführung, an dem die Zugabe von Sauerstoff beendet oder zumindest wesentlich reduziert wird.

### 6. Detaillierte Beschreibung der Figuren

Figur 1 zeigt das System SiO₂-FeO-CaO-Fe, dargestellt als Ternär-System im Gleichgewicht mit flüssigem Eisen mit den Hauptkomponenten FeO, CaO und SiO₂ bei 4 Liquidus-Isothermen von 1.400°C, 1.500°C, 1.600°C bzw. 1.700°C. Eingezeichnet sind die Linie der CaO-Sättigung sowie der Bereich der C2S-Sättigung, der ersichtlich deutlich breiter ausgeprägt ist, als die Linie der CaO-Sättigung, und demnach auch leichter einzustellen ist.

Figur 2 zeigt eine grafische Darstellung der Ergebnisse einer thermodynamischen Simulation des C2S-Phasenverhältnisses innerhalb der Schlacke und des Phosphor-Gehalts innerhalb der Metallschmelze über eine Blaszeit von 17 Minuten. Ab einer Blaszeit von etwa 10 Minuten sinkt das vorab stark angestiegene Verhältnis der C2S-Phase innerhalb der Schlacke ab, kurz danach folgt ein Anstieg des Phosphor-Gehalts innerhalb der Metallschmelze, was ersichtlich auf den Übergang von Phosphor aus der Schlacke in das Metallbad zurückzuführen ist.

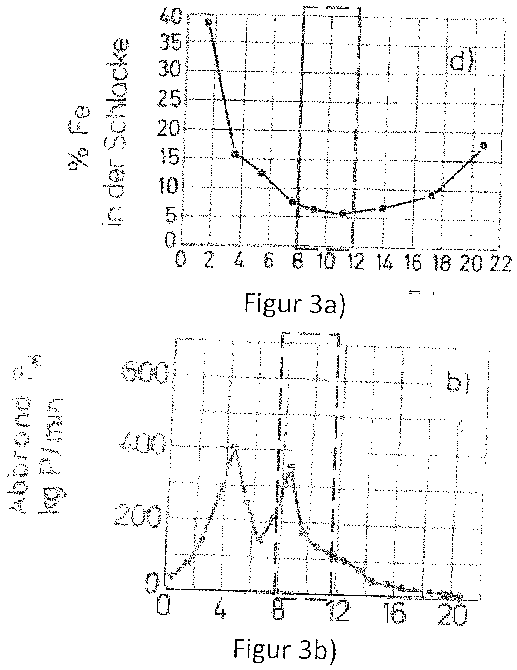

Figur 3a) zeigt den gemessenen Zustand der Schlacke während des Blasprozesses in einem LD-AC-Konverter, hier insbesondere des Fe-Gehalts innerhalb der Schlacke. Der Fe-Gehalt innerhalb der Schlacke weist in einem Bereich beginnend von etwa 8 Minuten Blaszeit und mit einem Minimum bei etwa 11 Minuten den niedrigsten Wert auf, was bedeutet, dass ein minimaler Anteil an Fe innerhalb der Schlacke und infolgedessen ein maximaler Anteil an Fe innerhalb der Metallschmelze vorliegen muss.

Figur 3b) zeigt eine grafische Darstellung der Phosphor- Entfernungsraten (in kg/min) über die Blaszeit hinweg. Wie hieraus ersichtlich ist, können Phosphor-Entfernungsraten im Bereich von bis zu 350 kg/min dann erreicht werden, wenn der FeO-Gehalt in der Schlacke niedriger als 10% liegt, was einer Blaszeit von etwa 8 bis 12 Minuten entspricht.

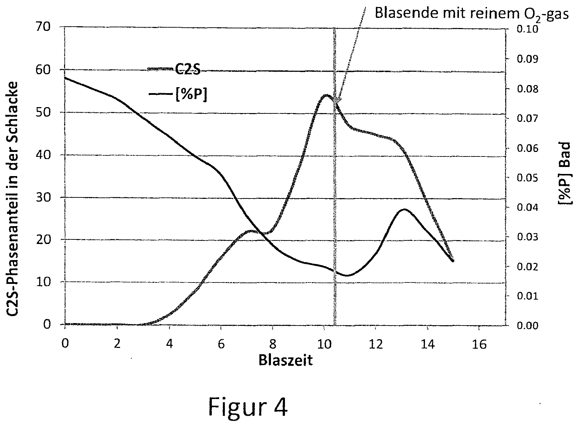

Figur 4 schließlich zeigt analog zu Figur 2 das Verhältnis der C2S-Phase innerhalb der Schlacke sowie des Gehalts an Phosphor innerhalb der Metallschmelze, wobei derjenige Zeitpunkt innerhalb des Blasprozesses angezeigt ist, der erfindungsgemäß das Ende der ersten Phase des Blasprozesses definiert, bei dem Sauerstoff zum Frischen und Entkohlen in großen Mengen zugegeben wird. Zur Vermeidung der Lösung des Phosphors aus der Schlacke und des Widereintritts des Phosphors in die Metallschmelze wird ab diesem Zeitpunkt, der durch das erstmalige Erreichen eines Zielwerts für den gewünschten Phosphor-Gehalt innerhalb der Metallschmelze und ebenso durch eine messbare Verringerung des C2S-Phasenverhältnisses innerhalb der Schlacke nach Erreichen eines kritischen C2S-Werts, typischerweise 20% - 60% der gesamten Schlackemenge, definiert ist, die Prozessführung ausschließlich auf eine weitere Entkohlung bei gleichzeitiger Vermeidung einer Re-Phosphorisierung des Metallbads abgestellt. Sollte keine weitere Entkohlungsreaktion gewünscht sein, kann das Verfahren zum Entkohlen und Entphosphern der Stahlschmelze im erfindungsgemäßen Sinne bereits beendet werden. Ist eine weitere Entkohlung gewünscht und/oder erforderlich, kann durch Zugabe eines geeigneten Prozessgases mit deutlich niedrigerem Sauerstoffgehalt, besonders bevorzugt um mindestens 50% geringerer Sauerstoffmenge verglichen mit der ersten Phase des Entkohlungs- und Entphospherungs-Verfahrens gemäß der Erfindung, die Entkohlung fortgesetzt werden. Dies wird vorzugsweise mittels Aufblasen eines Inertgases oder einer Mischung aus einem Inertgas und einem sauerstoffenthaltenden Gas mit dem Ziel erreicht, den Partialdruck von CO/CO₂ so niedrig zu halten, dass eine weitere Entkohlungsreaktion innerhalb der Metallschmelze eintritt.

## Patentansprüche

1. Verfahren zum Entkohlen und Entphosphern einer Stahlschmelze in einem metallurgischen Reaktor mittels einer regelbaren oder steuerbaren Zugabe eines Prozessgases unter Zugabe eines Schlackebildners,
**dadurch gekennzeichnet, dass**
- die Konzentration von Dicalciumsilicat (C2S) in der Schlacke im Bereich der Sättigung durch Zugabe von Schlackebildnern eingestellt wird;
- der FeO-Gehalt in der Schlacke < 20 Gew.-% beträgt;
- die Zugabe von Sauerstoff durch das Prozessgas bei Erreichen des Bereiches der C2S-Sättigung in der Schlacke reduziert wird;
- das in der Schmelze gelöste Phosphor (P) durch die Bildung einer C2S - 3CaO·P₂O₅-Phase in der Schlacke gebunden wird;
- eine Rückphospherung der Stahlschmelze durch die Schlacke mittels einer Prozess- und / oder Schlackenführung vermieden wird, wobei
• hierbei Schlackebildner während des Verfahrens zur Schlackenführung zugegeben werden können,
• die weitere Entkohlung der Schmelze ohne Zugabe von Sauerstoff erfolgt, oder
• die weitere Entkohlung der Schmelze durch eine regelbare oder steuerbare Sauerstoffzugabe erfolgt.

2. Verfahren gemäß Anspruch 1,
**dadurch gekennzeichnet, dass**
der Schlackebildner kontinuierlich oder diskontinuierlich zugegeben wird.

3. Verfahren gemäß einem der Ansprüche 1 oder 2,
**dadurch gekennzeichnet, dass** der Schlackebildner Kalk (CaO), Siliciumdioxid (SiO₂) und/oder weitere Bestandteile aufweist.

4. Verfahren gemäß einem der Ansprüche 1 bis 3,
**dadurch gekennzeichnet, dass**
das Prozessgas einen steuer- oder regelbaren variablen Anteil an Sauerstoff enthält.

5. Verfahren gemäß einem der Ansprüche 1 bis 4,
**dadurch gekennzeichnet, dass**
die Entkohlung der Schmelze durch die Reduzierung des Anteils an Sauerstoff im Prozessgas derart eingestellt wird, dass die Entkohlung mit Hilfe des Partialdrucks CO/CO₂ erfolgt.

6. Verfahren gemäß einem der Ansprüche 1 bis 5,
**dadurch gekennzeichnet, dass**
der FeO-Gehalt in der Schlacke maximal 10 Gew.-% beträgt.

7. Verfahren gemäß einem der Ansprüche 1 bis 6,
**dadurch gekennzeichnet, dass**
die Prozessführung durch ein thermodynamisches Modell berechenbar ist.

8. Verfahren gemäß Anspruch 7,
**dadurch gekennzeichnet, dass**
eine Prozessregelung unter Berücksichtigung der Ergebnisse des thermodynamischen Modells und unter Verwendung von Prozessparameter-Messungen, vorzugsweise von Online-Messungen, durchgeführt wird.

9. Verfahren gemäß einem der Ansprüche 1 bis 8,
**dadurch gekennzeichnet, dass** die Konzentration von Dicalciumsilicat (C2S) in der Schlacke unter Verschlackung von Silicium (Si) aus der Stahlschmelze eingestellt wird.

10. Verfahren gemäß einem der Ansprüche 1 bis 8,
**dadurch gekennzeichnet, dass**
die unter Entkohlung bei Vermeidung der Rückphospherung mit einer Sauerstoffzugabe erfolgt, die weniger als 50%, vorzugsweise weniger als 60%, besonders bevorzugt weniger als 75% der Sauerstoffzugabe zu Beginn des Verfahrens beträgt.

11. Verfahren nach Anspruch 10,
**dadurch gekennzeichnet, dass**
die Beendigung der Sauerstoffzugabe oder die Reduzierung der Sauerstoffzugabe nach einem erstmaligen Erreichen des vorab festgelegten Zielwertes für den Phosphorgehalt der Metallschmelze erfolgt.

12. Verfahren nach einem der Ansprüche 1 bis 11,
**dadurch gekennzeichnet, dass**
der metallurgische Reaktor ein BOF-Konverter ist.
